# EUROPÄISCHE PATENTSCHRIFT

(11) **EP 2 395 301 B1**
(45) Veröffentlichungstag und Bekanntmachung des Hinweises auf die Patenterteilung: **30.03.2016**
(21) Anmeldenummer: 10006129.0
(22) Anmeldetag: 14.06.2010
(51) Int. Cl.: F24J 3/08

(54) **Verbindungsstück für Rohrleitungen einer Erdwärmesondenanlage**
Connector for tubular conduits of a geothermal probe assembly
Élément de raccordement pour des tuyaux d'un sonde géothermique

(43) Veröffentlichungstag der Anmeldung: 14.12.2011
(73) Patentinhaber: HAKA.Gerodur AG, 9201 Gossau SG (CH)
(72) Erfinder: Vollenweider, Bruno, 8864 Reichenburg (CH); Mayer, Peter, 8717 Benken (CH); Ebnoether, Alfons, 8637 Laupen (CH)
(74) Vertreter: Schaad, Balass, Menzl & Partner AG

(56) Entgegenhaltungen:
- EP-A1- 1 036 974
- EP-A1- 1 387 130
- WO-A1-03/064915
- AT-A1- 505 104
- DE-A1- 2 928 414
- DE-A1-102007 002 606
- DE-A1-102007 036 324
- DE-U1-202009 002 420
- FR-A1- 2 933 171
- JP-A- 11 182 942
- JP-A- 2006 234 340

## Beschreibung

Die vorliegende Erfindung betrifft ein Verbindungsstück für Rohrleitungen einer Erdwärmesondenanlage gemäss dem Oberbegriff des Anspruchs 1.

Erdwärmesondenanlagen sind dem Fachmann bekannt und werden zur Nutzung der Erdwärme eingesetzt. Dazu werden Sondenrohre, die an ihrem vorlaufenden Ende über ein als Sondenfuss bezeichnetes Verbindungsstück paarweise miteinander verbunden sind, in ein Bohrloch im Erdreich abcesenkt.

Während des Betriebs der Erdwärmesondenanlage wird ein Wärmeträger von einem ersten Sondenkopf über ein Sondenzulaufrohr zum Sondenfuss geführt, dort umgelenkt und über ein Sondenrücklaufrohr zu einem zweiten Sondenkopf geführt. Die beiden Sondenköpfe sind über ein Sammelzulaufrohr bzw. über ein Sammelrücklaufrohr an eine Wärmepumpe angeschlossen.

EP-A-0582118 beschreibt eine Erdwärmesondenanlage, die parallel geschaltete Pfahlsonden umfasst, wobei jeweils zwei Pfahlsonden mit Verbindungsteilen miteinander verbunden sind. Besagtes Verbindungsteil besteht aus zwei 90°-Fittingen und einem Verbindungsrohr.

Demgegenüber wird in CH-A-687268 ein Sondenfuss beschrieben, welcher durch ein einstückig geformtes, um 183° gekrümmtes Kunststoffrohr gebildet ist. Besagtes Kunststoffrohr ist U-förmig und weist im Gegensatz zu Bögen, die aus zwei miteinander verschweissten 90°-Bögen gebildet sind, keine sprungartige Verengung auf.

Ein weiteres Erdwärmesonden-Rohrformteil aus Kunststoff mit einer Krümmung von 180° wird etwa in DE-A-10 2007 036 824 beschrieben.

Im Hinblick darauf, einen Sondenfuss zu schaffen, der in grossen Stückzahlen wirtschaftlich gefertigt werden kann, wurde in EP-A-1036974 ein Verbindungsstück vorgeschlagen, welches im Wesentlichen eine Y-Form aufweist und drei parallel verlaufende Rohrabschnitte umfasst, wobei der den Y-Stammteil bildende Rohrabschnitt mittels eines Stopfens verschlossen ist.

Das in EP-A-1036974 beschriebene Verbindungsstück hat sich als äusserst zuverlässig erwiesen. Allerdings besteht auch für dieses Verbindungsstück immer noch Optimierungspotential hinsichtlich einer möglichst hohen Betriebsicherheit der Erdwärmesondenanlage. Im Speziellen ist es erwünscht, dass durch geeignete Ausgestaltung des Verbindungsstücks eine Abnützung oder gar Beschädigung der Erdwärmesondenanlage durch allfällige im Wärmeträger mitgeführte Feststoffe wirksam minimiert oder gar eliminiert werden kann.

Die Aufgabe der vorliegenden Erfindung besteht somit darin, ein Verbindungsstück zur Verfügung zu stellen, welches es unter Beibehaltung der Vorteile des Verbindungsstücks gemäss EP-A-1036974 erlaubt, einen betriebsicheren und verschleissarmen Betrieb der Erdwärmesondenanlage zu gewährleisten.

Die erfindungsgemässe Aufgabe wird gelöst durch den Gegenstand des Anspruchs 1. Bevorzugte Ausführungsformen sind in den abhängigen Ansprüchen wiedergegeben.

Die vorliegende Erfindung betrifft somit ein Verbindungsstück für Rohrleitungen einer Erdwärmesondenanlage umfassend einen sich von einer Anschlussseite des Verbindungsstücks her erstreckenden Zulaufabschnitt, einen im Wesentlichen parallel dazu verlaufenden, über einen rohrbogenförmigen Umlenkungsabschnitt mit dem Zulaufabschnitt strömungsverbundenen und sich zur Anschlussseite hin erstreckenden Rücklaufabschnitt und einen auf der der Anschlussseite abgewandten Seite vom Umlenkungsabschnitt wegführenden, blinden Stammabschnitt.

Der Zulaufabschnitt und der Rücklaufabschnitt des Verbindungsstücks sind dazu bestimmt, mit einer Zulaufrohrleitung bzw. einer Rücklaufrohrleitung einer Erdwärmesondenanlage verbunden zu werden.

Erfindungsgemäss sind nun der Zulaufabschnitt und der Rücklaufabschnitt mindestens bereichsweise durch eine gemeinsame Wand voneinander getrennt. Somi= liegen nicht mehr vollständig separate Rohrabschnitte vor, wie dies etwa im Verbindungsstück gemäss EP-A-1036974 der Fall ist.

Aufgrund des erfindungsgemäss erhältlichen geringen Umlenkradius des Umlenkungsabschnitts kann ein optimiertes Strömungsverhalten des Wärmeträgers gewährleistet werden. Dieses bewirkt, dass allfällige im Wärmeträger mitgeführte Feststoffe im Stammabschnitt abgesetzt und damit wirksam aus dem Kreislauf des Wärmeträgers entzogen werden, was einen verschleissarmen und sicheren Betrieb der Erdwärmesondenanlage gewährleistet. Dieser Effekt kann unter anderem dadurch erklärt werden, dass aufgrund des erfindungsgemäss erhältlichen geringen Umlenkradius die auf die Feststoffe wirkende Querbeschleunigung vergrössert wird, welche somit im Bereich der Abzweigung des Stammabschnitts aus der Strömungsbahn ausgelenkt und im Stammabschnitt aufgenommen werden. In der Regel ist der Stammabschnitt des erfindungsgemässen Verbindungsstücks somit derart ausgestaltet, dass während des Betriebs der Erdwärmesondenanlage im durch das Verbindungsstück strömenden Wärmeträger mitgeführte Feststoffe aus der Strömungsbahn ausgelenkt und im Stammabschnitt abgesetzt werden.

Im Übrigen kann aufgrund der erfindungsgemässen Ausgestaltung unter Beibehaltung der Aussenabmessungen bekannter Verbindungsstücke die Wandstärke des Verbindungsstücks erhöht werden, womit ein höherer maximal zulässiger Betriebsdruck erreicht wird.

Eine besonders kompakte Ausgestaltung des Verbindungsstücks bzw. der Sondenrohranordnung und somit ein möglichst geringer Umlenkradius des Umlenkungsabschnitts wird erfindungsgemäss dadurch erhalten, dass im Längsmittelschnitt gemessen die Wandstärke (oder Wanddicke) der gemeinsamen Wand zwischen dem Zulaufabschnitt und dem Rücklaufabschnitt geringer ist als die Summe der Wandstärke des Zulaufabschnitts und der Wandstärke des Rücklaufabschnitts auf jeweils der der gemeinsamen Wand abgewandten Seite. Allfällige auf der Aussenoberfläche angeordnete Verstärkungselemente werden dabei für die Bemessung der Wandstärke nicht berücksichtigt.

Als Material für das Verbindungsstück kommt insbesondere ein Kunststoff, wie etwa ein Polyolefin, z.B. Polyethylen (PE), insbesondere PE-X, PE-RT, PE 80, PE 100 und PE 100-RC, Polypropylen (PP), einschliesslich PP-R, oder Polybutylen (PB) zur Anwendung. Denkbar sind aber insbesondere auch Polyamide (PA), Polystyrol (PS), StyrolButadien (SB), Acrylnitril-Butadien-Styrol-Polymerisate (ABS) oder Polyurethan (PUR). Im übrigen kann eine faserverstärkte Ausführung der oben genannten Kunststoffe zum Einsatz kommen, wodurch ein zusätzlich erhöhter maximal zulässiger Betriebsdruck erreicht werden kann.

Bevorzugt wird das Verbindungsstück im Spritzgussverfahren hergestellt. Alternativ dazu kann das Verbindungsstück aber auch etwa mittels Blasformen, Giessen oder Rotationsformen hergestellt werden. Weiter ist denkbar, einzelne Teile des Verbindungsstücks spanend fertig auszuarbeiten und/oder diese zu einem fertigen Verbindungsstück zusammenzufügen.

Wie oben erwähnt ist es denkbar, dass mindestens eine in das Material eingebettete Schicht eines weiteren Materials als Verstärkungsmaterial vorliegt. Hierzu kommen Fasern aller Art, beispielsweise verstreckte Polyolefine, zum Einsatz. Im Übrigen kann die Schicht durch eine Folie, wie etwa eine Metallfolie, gebildet werden.

Alternativ oder zusätzlich zur eingebetteten Schicht kann auf der Innen- und/oder Aussenoberfläche eine abriebfeste Schicht aufgebracht sein. Diesbezüglich ist etwa eine Schicht aus mindestens einem Material ausgewählt aus der Gruppe bestehend aus PP, PE, PA, ABS, PPS (Polyphenylensulfid), PUR und thermoplastischen Polyesterelastomeren, wie etwa HytreJ® (DuPont), denkbar. Besagte Materialien können wahlweise etwa mit Kohlefasern, Glasfasern, Kohlenstoffnanoröhren (carbon nanotubes; CNT) und/oder Glaskugeln verstärkt sein.

Die Wandstärke und das Material werden derart gewahlt, dass ein Nenndruck PN von 20 bar oder höher erlaubt wird. Dies trägt das Übrige zu einem sicheren Betrieb der Erdwärmesondenanlage bei. Ein Nenndruck von 20 bar oder höher kann beispielsweise dadurch erhalten werden, dass ein Verbindungsstück z.B. im Zulauf bzw. im Rücklauf aus PE 100 mit einem Durchmesser von 49 mm, ein Sicherheitsfaktor vcn 1,25 und eine wanddicke von mindestens 5,5 mm verwendet wird. Durch entsprechende Materialwahl kann aber auch bei dünnerer Wanddicke ein Nenndruck von 20 bar oder höher erlaubt sein.

Weiter ist bevorzugt, dass auf der Aussenoberfläche des Zulaufabschnitts, des Umlenkungsabschnitts, des Rücklaufabschnitts und/oder des Stammabschnitts Verstärkungselemente angeordnet sind. Dabei handelt es sich um lokale Verdickungen der Wand des jeweiligen Abschnitts.

Die Verstärkungselemente sind bevorzugt im Bereich der auf der gemeinsamen Wand abgewandten Seite angeordnet, da dieser beim Einführen in das Bohrloch etwa durch vorstehendes Erdreich einer besonders starken Beanspruchung ausgesetzt ist.

Die Verstärkungselemente können insbesondere als in Achsrichtung des jeweiligen Rohrabschnitts aufeinanderfolgend oder versetzt zueinander angeordnete Noppen vorliegen. Dabei ist weiter bevorzugt, dass die Noppen ein kreisrundes, elliptisches, augenförmiges und/oder tropfenförmiges Grundprofil aufweisen. Alternativ oder zusätzlich dazu können die Verstärkungselemente als in Längsrichtung verlaufende Rippen ausgebildet sein. Bei beiden Ausführungsformen wird gewährleistet, dass allfälliges im Bohrloch vorhandenes Wasser im Sinne eines möglichst einfachen Absenkens der Sondenrohre verdrängt werden und über die zwischen den Verstärkungselementen ausgebildeten, sickenartigen Vertiefungen nach oben entweichen kann. Im Übrigen wird durch die Form der Verstärkungselemente erwähnter Ausführungsformen die Gefahr eines Verkantens des Verbindungsstücks im Bohrloch gering gehalten.

Die Verstärkungselemente können aus demselben Material wie die Rohrabschnitte gebildet sein oder aus einem anderen Material, insbesondere einem Material mit einer gegenüber dem Material der Rohrabschnitte erhöhten Härte.

Ein möglichst einfaches Absenken ins Bohrloch kann im Übrigen dadurch erreicht werden, dass das Verbindungsstück auf seiner Aussenoberfläche eine Schuppenstruktur aufweist.

Um das Absenken der Sondenrohre weiter zu vereinfachen, weist das erfindungsgemässe Verbindungsstück im Bereich der gemeinsamen Wand vorzugsweise zusätzlich einen von der Aussenoberfläche abstehenden Vorsprung auf, der eine bezüglich Achsrichtung des Zulauf- bzw. Rücklaufabschnitts im Wesentlichen rechtwinklig verlaufende Auflagefläche bildet. Werden die Sondonrohre mittels einer entsprechenden Einführvorrichtung, insbesondere einer Einführvorrichtung gemäss EP-A-2123995, ins Bohrloch eingeführt, so erlaubt es besagte Auflagefläche, auf das Verbindungsstück eine Stosskraft zum Einführen der Sondenrohre auszuüben. In der Regel kommt dazu eine Einführstange oder eine andere Stossvorrichtung zur Anwendung. Aufgrund der Anordnung des Vorsprungs im Bereich der gemeinsamen Wand kann die Stosskraft in optimaler Weise aufgenommen werden; die Gefahr einer durch die Stosskraft verursachten Beschädigung des Verbindungsstücks kann somit gering gehalten werden. Im Übrigen wird dadurch, dass die Auflagefläche rechtwinklig zur Längsachse der Sondenrohre bzw. des Zulauf-, Rücklauf-und Stammabschnitts des Verbindungsstücks verläuft, gewährleistet, dass die Krafteinwirkung genau in der Absenkrichtung erfolgen und somit ein Ausschwenken der Sondenrohranordnung in Richtung der Bohrlochwände vermieden werden kann.

Gemäss einer weiteren bevorzugten Ausführungsform verläuft die Achse des Stammabschnitts mittig zwischen der Achse des Zulaufabschnitts und der Achse des Rücklaufabschnitts. Dadurch wird nicht nur ein möglichst einfaches Absenken der Sondenrohre ermöglicht, sondern auch eine optimale Sedimentation allfälliger im Wärmeträger mitgeführter Feststoffe im Stammabschnitt.

Der Begriff "blind", wie er im Zusammenhang mit der vorliegenden Erfindung verwendet wird, bedeutet, dass der Stammabschnitts an seinem der Abzweigung vom Umlenkungsabschnitt abgewandten Ende verschlossen ist.

Diesbezüglich ist bevorzugt, dass das der Anschlussseite abgewandte Ende des Stammabschnitts mittels eines Stopfens verschlossen ist, was eine wirtschaftliche Herstellung des Verbindungsstücks in grosser Stückzahl erlaubt. Im Besonderen weist der Stopfen einen zylindrischen Teil und einen sich rechtwinklig zu diesem erstreckenden Bodenteil auf, wobei der Stopfen mit dem zylindrischen Teil in das Innere des Stammabschnitts hineinragt und an den Berührungsflächen mit diesem fest verbunden und dauerhaft dicht ist. Dabei ist insbesondere denkbar, dass der Stopfen mit dem Stammabschnitt verschweisst ist.

Im Übrigen ist diesbezüglich bevorzugt, dass der Stopfen Mittel zur Befestigung eines Absenkgewichts aufweist.

Denkbar ist etwa, dass der Stopfen auf seiner dem Stammabschnitt abgewandten Seite hierzu eine Lasche aufweist. In der Regel liegt diese in einer parallel zur Achse des Zulaufabschnitts, des Rücklaufabschnitts und des Stammabschnitts verlaufenden Ebene. In dieser Lasche können Durchbrüche zur Befestigung eines Absenkgewichts, etwa eines Gewichtsbehälters, vorgegehen sein.

Um den Zulaufabschnitt und den Rücklaufabschnitt des Verbindungsstücks mit der Zulaufrohrleitung bzw. der Rücklaufrohrleitung zu verbinden, kann insbesondere ein Sturfpfschweissen, Muffenschweissen und/oder Heizwendelschweissen zur Anwendung kommen. In der Regel ist eine Verbindung mittels Muffenschweissen aufgrund der damit verbundenen kurzen Fertigungszeiten bevorzugt. Erfolgt die Verbindung mittels Stumpfschweissen, so ist insbesondere bevorzugt, dass der Schweisswulst gegenüber der Aussonkontur nach Innen zurückgesetzt ist, wodurch die Gefahr einer Beschädigung durch Abrieb minimiert wird.

Auch für das permanent Verschliessen des Stammabschnitts mit dem Stopfen kommt insbesondere ein Stumpfschweissen, Muffenschweissen, Heizwendelschweissen und/oder Vergiessen in Frage.

Vor dem Verschliessen des Stammabschnitts mit dem Stopfen können in übrigen Sensoren oder ähnliche Mittel in die einzelnen Abschnitte des Verbindungsstücks und/oder in die Zulaufrohrleitung und Rücklaufrohrleitung eingeführt werden. Insbesondere kann ein sensor zur Druck-, Temperatur- und/oder Strömungsgeschwindigkeitsmessung eingeführt werden. Beispielsweise ist denkbar, ein Glasfaserkabel in den Zulauf- und/oder den Rücklaufabschnitt bzw. die Zulauf- und/oder die Rücklaufrohrleitung einzublasen.

Um das Strömungsverhalten zu optimieren, sind im Umlenkungsabschnitt bevorzugt Strömungseinbauten angeordnet.

Nebst dem oben beschriebenen Verbindungsstück betrifft die vorliegende Erfindung zudem ein Verfahren zur Entfernung von Feststoffen aus der Strömungsbahn eines Wärmeträgers einer Erdwärmesondenanlage. Dieses umfasst den Schritt, dass der Wärmeträger durch ein Verbindungsstück gemäss obiger Beschreibung geleitet wird, wobei die Feststoffe aus der Strömungsbahn ausgelenkt und im Stammabschnitt des Verbindungsstücks aufgenommen werden. Dabei ist bevorzugt, dass die Feststoffe im Stammabschnitts abgesetzt werden, also sedimentieren, wodurch sie der Strömungsbahn permanent entzogen werden.

Die Erfindung wird anhand der Figuren im Detail erläutert.

Es zeigt:

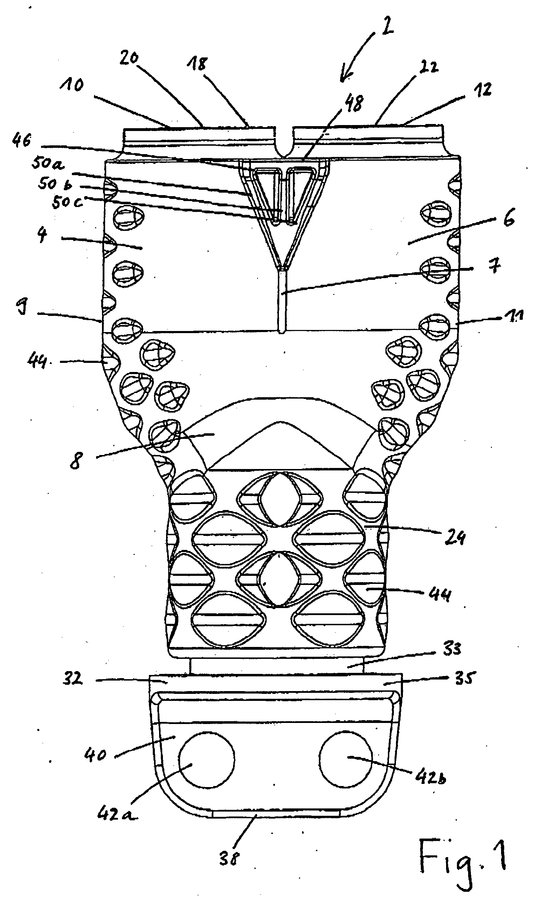

- Fig. 1: eine Seitenansicht eines erfindungsgemässen Verbindungsstücks;
- Fig. 2: einen Längsmittelschnitt des in Fig. 1 gezeigten Verbindungsstücks;

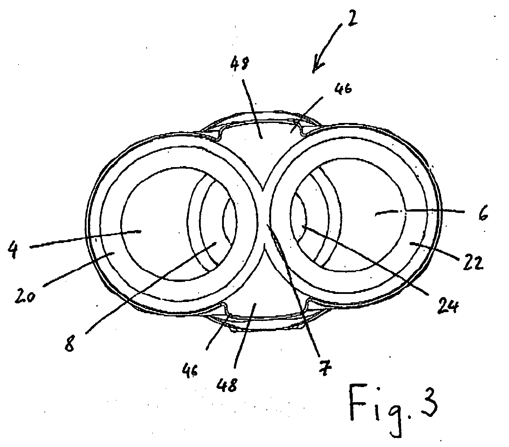

- Fig. 3: eine Draufsicht auf die Anschlussseite des in den Fig.s 1 und 2 gezeigten Verbindungsstücks;

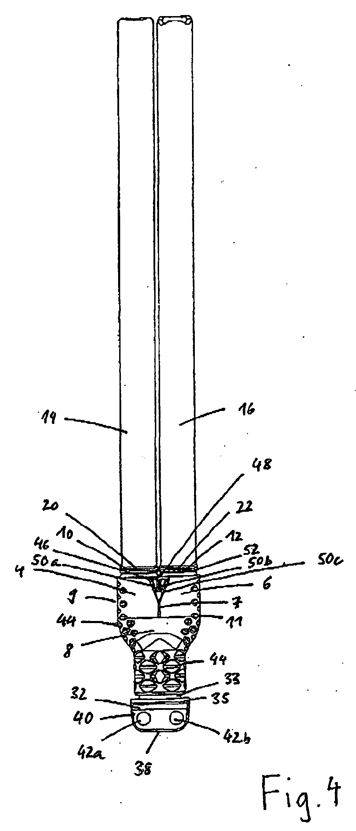

- Fig. 4: eine Seitenansicht einer Sondenrohranordnung umfassend das in den Fig.s 1 bis 3 gezeigte Verbindungsstück und eine daran angeschlossene, teilweise dargestellte Zulaufrohrleitung und Rücklaufrohrleitung; und
- Fig. 5: einen Längsmittelschnitt durch die in Fig. 4 gezeigte Sondenrohranordnung.

Wie aus den Figuren ersichtlich ist, umfasst das erfindungsgemässe Verbindungsstück 2 einen Zulaufabschnitt 4 und einen parallel dazu verlaufenden Rücklaufabschnitt 6. Diese werden bereichsweise durch eine gemeinsame Wand 7 voneinander getrennt.

Wie insbesondere aus den Fig.s 2 und 5 ersichtlich ist, ist der Zulaufabschnitt 4 über einen rohrbogenförmigen Umlenkungsabschnitt 8 mit dem Rücklaufabschnitt 6 strömungsverbunden. Die durch den Umlenkungsabschnitt 8 beschriebene Umlenkung beträgt ca. 180° und verläuft in der gezeigten Ausführungsform kreisbogenförmig.

Im Bereich ihres freien Endes 10 bzw. 12 weisen der Zulaufabschnitt 4 und der Rücklaufabschnitt 6 Mittel zum Anschliessen einer entsprechenden Zulaufrohrleitung 14 bzw. Rücklauf rohrleitung 16 auf, wie insbesondere aus den Fig.s 4 und 5 ersichtlich ist. Die entsprechende Seite bildet somit die Anschlussseite 18 des Verbindungsstücks 2.

In der gezeigten Ausführungsform liegen die Stirnfläche 20 des Zulaufabschnitts 4 und die Stirnfläche 22 des Rücklaufabschnitts 6 in der gleichen Ebene. Denkbar ist aber auch, dass diese versetzt zueinander angeordnet sind.

Auf der der Anschlussseite 18 abgewandten Seite führt vom Umlenkungsabschnitt 8 ein Stammabschnitt 24 weg, welcher ebenfalls parallel zum zulaufabschnitt 4 und zum Rücklaufabschnitt 6 verlauft. Der Zulaufabschnitt 4 und der Rücklaufabschnitt 6 sind dabei symmetrisch um die Achse des Stammabschnitts 24 angeordnet.

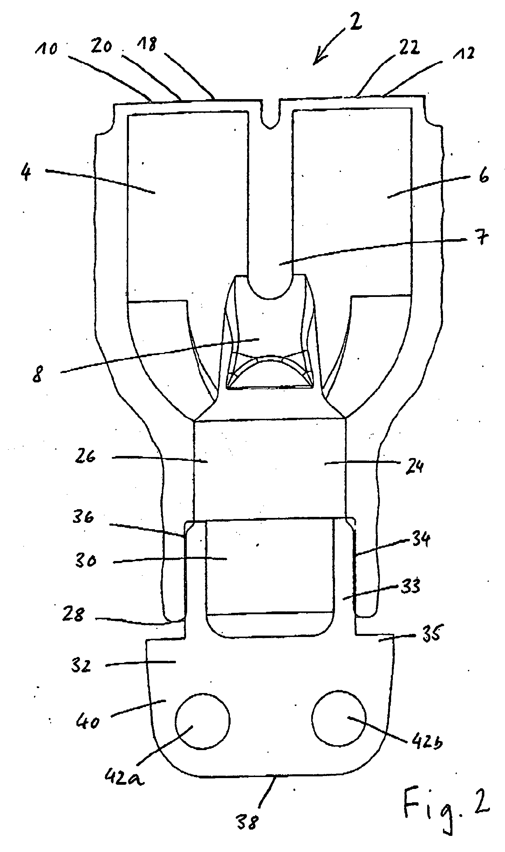

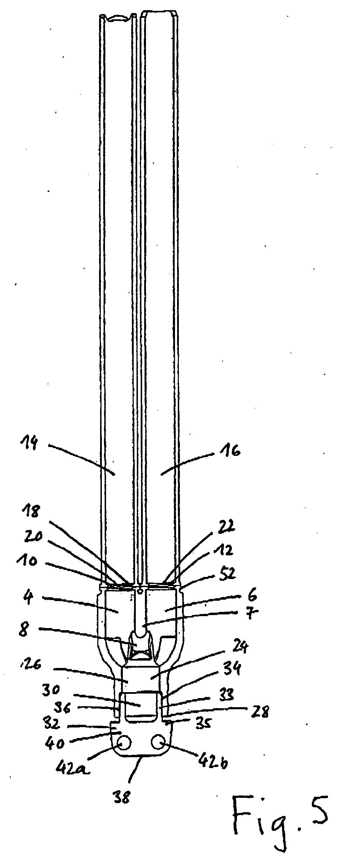

Gemäss Fig. 2 und 5 ist in der gezeigten Ausführungsform im Längsmittelschnitt gemessen die Wandstärke der gemeinsamen Wand 7 zwischen dem Zulaufabschnitt 4 und dem Rücklaufabschnitt 6 geringer ist als die Summe der Wandstärke des Zulaufabschnitts 4 und der Wandstärke des Rücklaufabschnitts 6 auf jeweils der der gemeinsamen Wand 7 abgewandten Seite 9 bzw. 11.

Im Vergleich zum Zulaufabschnitt 4 und zum Rücklaufabschnitt 6, welche über einen kontinuierlichen, im Wesentlichen identischen freien Rohrquerschnitt verfügen, ist der freie Rohrquerschnitt des Stammabschnitts 24 breiter ausgestaltet, wie insbesondere aus den Fig.s 2 und 5 hervorgeht.

Der Stammabschnitt 24 weist einen ersten, dem Umlenkungsabschnitt 8 zugewandten Bereich 26 und einen zweiten, dem freien Ende 28 hin zugewandten Bereich 30 auf, wobei sich der Innendurchmesser beim Übergang vom ersten Bereich 26 zum zweiten Bereichs 30 stufenartig aufweitet. In den Stammabschnitt 24 ist in der gezeigten Ausführungsform ein Stopfen 32 eingeschoben. Dieser weist einen zylindrischen Teil 33 und einen sich rechtwinklig zu diesem erstreckenden Bodenteil 35 auf, wobei der zylindrische Teil 33 in das Innere des Stammteils 24 hineinragt und an den Berührungsflächen 34 mit der Innenoberfläche 36 des Stammabschnitts 24 fest verbunden ist.

In den in den Figuren gezeigten Ausführungsformen weist der Stopfen 32 auf seiner dem Stammabschnitt 24 abgewandten Seite eine Lasche 40 auf, welche in einer parallel zur Achse des Zulaufabschnitts 4, des Rücklaufabschnitts 6 und des Stammabschnitts 24 verlaufenden Ebene verläuft. In der Lasche sind zwei symmetrisch um die Achse des Stammabschnitts 24 angeordnete Durchbrüche 42a, 42b zur Befestigung eines Absenkgewichts, etwa eines Gewichtsbehälters, vorgesehen. Die Durchbrüche 42a, 42b weisen in den gezeigten Ausführungsformen eine kreisrunde. Form auf, sie können aber jede andere für den genannten Zweck geeignete Form aufweisen.

Die Lasche 40 weist in der gezeigten Ausführungsform die Form eines gleichschenkligen Trapezes auf, wobei die kürzere der beiden parallelen Grundseiten das vorlaufende Ende 38 bildet. Die Ecken zwischen den Schenkeln des Trapez und der das vorlaufende Ende 38 bildenden Grundseite ist in den gezeigten Ausführungsformen abgerundet ausgestaltet, um die Gefahr eines Verkantens mit vorstehendem Erdreich im Bohrloch gering zu halten und somit ein möglichst einfaches Absenken der Sondenrohranordnung zu gewährleisten.

Im Bereich der auf der gemeinsamen Wand 7 abgewandten und somit der beim Absenken der Bohrlochwand zugewandten Seite des Zulaufabschnitts 4, des Rücklaufabschnitts 6 und des Umlaufabschnitts 8 sind auf der Aussenoberfläche Verstärkungselemente 44 in Form von Noppen angeordnet. Diese weisen in der gezeigten Ausführungsform im Wesentlichen ein augenförmiges Grundprofil auf. Verstärkungselemente 44 sind im Übrigen auch auf der Aussenoberfläche des Stammabschnitts 24 umlaufend angeordnet. Diese sind in der gezeigten Ausführungsform ebenfalls als Noppen mit augenförmigem Grundprofil ausgebildet, besagtes Grundprofil weist aber im Vergleich zu den Verstärkungselementen 44 des Zulaufabschnitts 4, des Rücklaufabschnitts 6 und des Umlenkungsabschnitts 8 eine grössere Grundfläche auf.

Weiter weist das in den Figuren gezeigte Verbindungsstück 2 im Bereich der gemeinsamen Wand 7 auf den beiden einander gegenüberliegenden Seiten je einen von der Aussenoberfläche abstehenden Vorsprung 46 auf, der eine bezüglich Achsrichtung des Zulaufabschnitts 4 bzw. Rücklaufabschnitts 6 im Wesentlichen rechtwinklig vorlaufende Auflagefläche 48 bildet. Werden die Sondenrohre bzw. das diese verbindende Verbindungsstück mittels einer Einführvorrichtung, wie sie etwa aus EP-A-2123995 bekannt ist, ins Bohrloch eingeführt, so erlaubt es die Auflagefläche 48, eine entsprechende Stosskraft auf das Verbindungsstück 2 auszuüben. In Richtung zum vorlaufenden Ende 38 hin ist der Vorsprung 46 im Übrigen über Stützelemente 50a, 50b, 50c abgestützt.

Gemäss den Fig.s 4 und 5 ist in der gezeigten Sondenrohranordnung das Verbindungsstück 2 mit der Zulaufrohrleitung 14 und der Rücklaufrohrleitung 16 über ein Stumpfschweissen verbunden. Der sich dabei ergebende Wulst 52 ist gegenüber der Aussenkontur des Verbindungsstücks 2 nach Innen zurückversetzt, wodurch die Gefahr einer Beschädigung durch Abrieb beim Absenken ins Bohrloch minimiert wird.

Nebst dem Stumpfschweissen ist insbesondere auch denkbar, die genannten Komponenten über ein Muffenschweissen oder Heizwendelschweissen miteinander zu verbinden.

In diesem Zusammenhang ist denkbar, dass die Zulaufrohrleitung und die Rücklaufrohrleitung in den Zulaufabschnitt bzw. den Rücklaufabschnitt des Verbindungsstücks eingeschoben sind und an ihrer Berührungsfläche mit der Innenoberfläche des jeweiligen Abschnitts verschweisst wird.

Denkbar ist weiter, dass sich der Innendurchmesser des Zulaufabschnitts und der Innendurchmesser des Rücklaufabschnitts zum freien Ende hin stufenartig aufweiten, wobei der Abschnitz mit dem aufgeweiteten Innendurchmesser dem Schweissabschnitt des jeweiligen Abschnitts entspricht.

Während des Betriebs der Erdwärmesondenanlage wird ein Wärmeträger durch die Sondenrohre und damit durch die Zulaufrohrleitung 14, den Zulaufabschnitt 4, den Umlenkungsabschnitt 8, den Rücklaufabschnitt 6 und die Rücklaufrohrleitung 16 gepumpt.

Liegen im Wärmeträger Feststoffe vor, die zu einem Abrieb oder gar einer Beschädigung der Ercwärmesondenanlage führen könnten, so können diese im Stammabschnitt 24 des erfindungsgemässen Verbindungsstücks 2 abgesetzt und somit dem Wärmeträgerkreislauf entzogen werden. Nach längerem Gebrauch der Erdwärmesondenanlage kann sich somit eine Art "Pumpensumpf" bilden, ohne dass die darin abgelagerten Feststoffe in den Kreislauf des Wärmeträgers zurückgelangen und dadurch die Erdwärmesondenanlage beeinträchtigen könnten.

Es hat sich gezeigt, dass der Effekt der Sedimentation von Feststoffen im Stammabschnitt besonders stark ausgeprägt ist, wenn der vom Umlenkungsabschnitt 8 beschriebene Umlenkradius minimiert wird, wie dies durch die erfindungsgemäss erhältliche, kompakte Ausgestaltung des Verbindungsstücks 2 der Fall ist. Aufgrund des geringen Umlenkradius wird die auf die Feststoffe wirkende Querbeschleunigung vergrössert, welche somit im Bereich der Abzweigung des Stammabschnitts 24 stärker aus der Strömungsbahn ausgelenkt und somit im Stammabschnitt 24 aufgenommen und vorzugsweise in diesem abgesetzt werden.

## Patentansprüche

1. Verbindungsstück für Rohrleitungen einer Erdwärmesondenanlage umfassend einen sich von einer Anschlussseite (18) des Verbindungsstücks her erstreckenden Zulaufabschnitt (4), einen im Wesentlichen parallel dazu verlaufenden, über einen rohrbogenförmigen Umlenkungsabschnitt (8) mit dem Zulaufabschnitt (4) strömungsverbundenen und sich zur Anschlussseite (18) hin erstreckenden Rücklaufabschnitt (6) und einen auf der der Anschlussseite (18) abgewandten Seite vom Umlenkungsabschnitt (8) wegführenden, blinden Stammabschnitt (24), **dadurch gekennzeichnet, dass** der Zulaufabschnitt (4) und der Rücklaufabschnitt (6) mindestens bereichsweise durch eine gemeinsame Wand (7) voneinander getrennt sind und dass im Längsmittelschnitt gemessen die Wandstärke der gemeinsamen Wand (7) zwischen dem Zulaufabschnitt (4) und dem Rücklaufabschnitt (6) geringer ist als die Summe der Wandstärke des Zulaufabschnitts und der Wandstärke des Rücklaufabschnitts auf jeweils der der gemeinsamen Wand abgewandten Seite (9 bzw. 11).

2. Verbindungsstück nach Anspruch 1, **dadurch gekennzeichnet, dass** die Achse des Stammabschnitts (24) mittig zwischen der Achse des Zulaufabschnitts (4) und der Achse des Rücklaufabschnitts (6) verläuft.

3. Verbindungsstück nach einem der vorhergehenden Ansprüche, **dadurch gekennzeichnet, dass** das der Anschlussseite (18) abgewandte Ende des Stammabschnitts (24) mittels eines Stopfens (32) verschlossen ist.

4. Verbindungsstück nach Anspruch 3, **dadurch gekennzeichnet, dass** der Stopfen (32) einen zylindrischen Teil (33) und einen sich rechtwinklig zu diesem erstreckenden Bodenteil (35) aufweist, wobei der Stopfen (32) mit dem zylindrischen Teil (33) in das Innere des Stammabschnitts (24) hineinragt und an den Berührungsflächen (34) mit diesem fest verbunden ist.

5. Verbindungsstück nach Anspruch 3 oder 4, **dadurch gekennzeichnet, dass** der Stopfen (32) Mittel (42a, 42b) zur Befestigung eines Absenkgewichts aufweist.

6. Verbindungsstück nach einem der vorhergehenden Ansprüche, **dadurch gekennzeichnet, dass** der Stammabschnitt (24) derart ausgestaltet ist, dass während des Betriebs der Erdwärmesondenanlage im durch das Verbindungsstück strömenden Wärmeträger mitgeführte Feststoffe aus der Strömungsbahn ausgelenkt und im Stammabschnitt (24) abgesetzt werden.

7. Verbindungsstück nach einem der vorhergehenden Ansprüche, **dadurch gekennzeichnet, dass** auf der Aussenoberfläche des Zulaufabschnitts (4), des Umlenkungsabschnitts (8), des Rücklaufabschnitts (6) und/oder des Stammabschnitts (24) Verstärkungselemente (44) angeordnet sind.

8. Verbindungsstück nach Anspruch 7, **dadurch gekennzeichnet, dass** die Verstärkungselemente (44) als in Achsrichtung des jeweiligen Rohrabschnitts aufeinanderfolgend oder versetzt zueinander angeordnete Noppen vorliegen.

9. Verbindungsstück nach Anspruch 8, **dadurch gekennzeichnet, dass** die Noppen ein kreisrundes, elliptisches, augenförmiges und/oder tropfenförmiges Grundprofil aufweisen.

10. Verbindungsstück nach einem der vorhergehenden Ansprüche, **dadurch gekennzeichnet, dass** es aus Kunststoff, vorzugsweise aus einem Polyolefin, gefertigt ist.

11. Verbindungsstück nach einem der vorhergehenden Ansprüche, **dadurch gekennzeichnet, dass** es im Bereich der gemeinsamen Wand (7) einen von der Aussenoberfläche abstehenden Vorsprung (46) aufweist, der eine bezüglich Achsrichtung des Zulaufabschnitts (4) bzw. Rücklaufabschnitts (6) im Wesentlichen rechtwinklig verlaufende Auflagefläche (48) bildet.

12. Verfahren zur Entfernung von Feststoffen aus der Strömungsbahn eines Wärmeträgers einer Erdwärmesondenanlage, umfassend den Schritt, dass der Wärmeträger durch ein Verbindungsstück (2) gemäss einem der vorhergehenden Ansprüche geleitet wird, wobei die Feststoffe aus der Strömungsbahn ausgelenkt und im Stammabschnitt (24) des Verbindungsstücks (2) aufgenommen werden.

13. Verfahren nach Anspruch 12, **dadurch gekennzeichnet, dass** die Feststoffe im Stammabschnitt (24) abgesetzt werden.

## Claims

1. Connector for pipelines of a geothermal probe system, comprising a feed portion (4) extending from a connection side (18) of the connector, a return portion (6) which runs essentially parallel to the feed portion, is flow-connected to the feed portion (4) via a deflecting portion (8) in the form of a pipe bend and extends in the direction of the connection side (18), and a blind trunk portion (24) leading away from the deflecting portion (8) on the side directed away from the connection side (18), **characterized in that** the feed portion (4) and the return portion (6) are separated from one another, at least in certain regions, by a common wall (7), and **in that** as seen in longitudinal section through the centre, the wall thickness of the common wall (7) between the feed portion (4) and the return portion (6) is smaller than the sum of the wall thickness of the feed portion and the wall thickness of the return portion on the side (9 and 11 respectively) directed away from the common wall in each case.

2. Connector according to Claim 1, **characterized in that** the axis of the trunk portion (24) runs centrally between the axis of the feed portion (4) and the axis of the return portion (6).

3. Connector according to one of the preceding claims, **characterized in that** that end of the trunk portion (24) which is directed away from the connection side (18) is closed by means of a plug (32).

4. Connector according to Claim 3, **characterized in that** the plug (32) has a cylindrical part (33) and a base part (35), which extends at right angles to the cylindrical part, wherein the plug (32) projects into the interior of the trunk portion (24) by way of the cylindrical part (33) and is fixed thereto along the contact surfaces (34).

5. Connector according to Claim 3 or 4, **characterized in that** the plug (32) has means (42a, 42b) on which to fasten a sinking weight.

6. Connector according to one of the preceding claims, **characterized in that** the trunk portion (24) is configured such that, during operation of the geothermal probe system, solids entrained in the heat transfer medium flowing through the connector are deflected from the flow path and deposited in the trunk portion (24).

7. Connector according to one of the preceding claims, **characterized in that** reinforcing elements (44) are arranged on the outer surface of the feed portion (4), of the deflecting portion (8), of the return portion (6) and/or of the trunk portion (24).

8. Connector according to Claim 7, **characterized in that** the reinforcing elements (44) are present in the form of protuberances which are offset in relation to one another or follow one after the other in the axial direction of the respective pipe portion.

9. Connector according to Claim 8, **characterized in that** the protuberances have a circular, elliptical, eye-shaped and/or droplet-shaped basic profile.

10. Connector according to one of the preceding claims, **characterized in that** it is produced from plastics material, preferably from a polyolefin.

11. Connector according to one of the preceding claims, **characterized in that**, in the region of the common wall (7), it has a protrusion (46), which projects from the outer surface and forms a bearing surface (48) running essentially at right angles in relation to the axial direction of the feed portion (4) and of the return portion (6) respectively.

12. Method of removing solids from the flow path of a heat transfer medium of a geothermal probe system, comprising the step of the heat transfer medium being conducted through a connector (2) according to one of the preceding claims, wherein the solids are deflected from the flow path and accommodated in the trunk portion (24) of the connector (2).

13. Method according to Claim 12, **characterized in that** the solids are deposited in the trunk portion (24).

## Revendications

1. Élément de raccordement pour des tuyaux d'une installation de sonde géothermique, comprenant une partie d'entrée (4) s'étendant à partir d'un côté de connexion (18) de l'élément de raccordement, une partie de retour (6) s'étendant essentiellement parallèlement à la partie d'entrée et reliée hydrauliquement à la partie d'entrée (4) au moyen d'une partie de déviation (8) en forme de tuyau coudé qui s'étend en direction du côté de connexion (18), et une partie de tronc borgne (24) s'écartant de la partie de déviation (8) sur le côté opposé au côté de connexion (18), **caractérisé en ce que** la partie d'entrée (4) et la partie de retour (6) sont séparés l'un de l'autre, au moins dans certaines régions, par une paroi commune (7), et **en ce que**, mesuré selon une coupe longitudinale par le milieu, l'épaisseur de paroi de la paroi commune (7) entre la partie d'entrée (4) et la partie de retour (6) est plus petite que la somme de l'épaisseur de paroi de la partie d'entrée et de l'épaisseur de paroi de la partie de retour chaque fois sur le côté (9 respectivement 11) opposé à la paroi commune.

2. Élément de raccordement selon la revendication 1, **caractérisé en ce que** l'axe de la partie de tronc (24) s'étend centralement entre l'axe de la partie d'entrée (4) et l'axe de la partie de retour (6).

3. Élément de raccordement selon l'une des revendications précédentes, **caractérisé en ce que** l'extrémité de la partie de tronc (24) qui est opposée au côté de connexion (18) est fermée au moyen d'un bouchon (32).

4. Élément de raccordement selon la revendication 3, **caractérisé en ce que** le bouchon (32) présente une partie cylindrique (33) et une partie de fond (35) qui s'étend à angle droit par rapport à cette partie cylindrique, le bouchon (32) dépassant à l'intérieur de la partie de tronc (24) avec la partie cylindrique (33) et étant fixé à celle-ci au niveau des surfaces de contact (34).

5. Élément de raccordement selon la revendication 3 ou 4, **caractérisé en ce que** le bouchon (32) présente des moyens (42a, 42b) pour la fixation d'un poids pour la descente.

6. Élément de raccordement selon l'une des revendications précédentes, **caractérisé en ce que** la partie de tronc (24) est arrangée de telle sorte que, pendant l'utilisation de l'installation de sonde géothermique, les matières solides entraînées dans l'agent caloporteur s'écoulant à travers l'élément de raccordement sont déviées du chemin d'écoulement et déposées dans la partie de tronc (24).

7. Élément de raccordement selon l'une des revendications précédentes, **caractérisé en ce que** des éléments de renforcement (44) sont disposés sur la surface extérieure de la partie d'entrée (4), de la partie de déviation (8), de la partie de retour (6) et/ou de la partie de tronc (24).

8. Élément de raccordement selon la revendication 7, **caractérisé en ce que** les éléments de renforcement (44) sont présents sous la forme de protubérances disposées successivement ou en quinconce l'une par rapport à l'autre dans la direction axiale de chaque partie de tuyau.

9. Élément de raccordement selon la revendication 8, **caractérisé en ce que** les protubérances présentent un profil de base circulaire, elliptique, en forme d'oeil et/ou en forme de goutte.

10. Élément de raccordement selon l'une des revendications précédentes, **caractérisé en ce qu'**il est fabriqué en matière plastique, préférablement en polyoléfine.

11. Élément de raccordement selon l'une des revendications précédentes, **caractérisé en ce qu'**il présente dans la région de la paroi commune (7) une saillie (46) qui s'étend à partir de la surface extérieure et qui forme une surface d'appui (48) s'étendant essentiellement à angle droit par rapport à la direction axiale de la partie d'entrée (4), respectivement de la partie de retour (6).

12. Procédé pour l'enlèvement de matières solides du chemin d'écoulement d'un agent caloporteur d'une installation de sonde géothermique, comprenant l'étape que l'agent caloporteur est conduit à travers un élément de raccordement (2) selon l'une des revendications précédentes, dans lequel les matières solides sont déviées du chemin d'écoulement et recueillies dans la partie de tronc (24) de l'élément de raccordement (2).

13. Procédé selon la revendication 12, **caractérisé en ce que** les matières solides sont déposées dans la partie de tronc (24).
